# EUROPÄISCHE PATENTANMELDUNG

(11) **EP 1 939 024 A2**
(43) Veröffentlichungstag der Anmeldung: **02.07.2008**
(21) Anmeldenummer: 07025228.3
(22) Anmeldetag: 28.12.2007
(51) Int. Cl.: B60J 7/06

(54) **Planensystem**

(30) Priorität: 28.12.2006 DE 202006019548 U
(71) Anmelder: Schrott, Carsten Peter, 81379 München (DE)
(72) Erfinder: Schrott, Carsten Peter, 81379 München (DE)
(74) Vertreter: Strehl Schübel-Hopf & Partner

(57) **Zusammenfassung**

Die Erfindung betrifft ein Planensystem für einen Behälter, insbesondere für einen Container auf der Ladefläche oder einem Anhänger eines Nutzfahrzeugs. Das Planensystem umfasst ein Seil 16 zum Aufspannen und Zusammenfalten einer Plane, wobei das Seil über mehrere Seilführungseinrichtungen längs der Behälterwände umgelenkt wird. Durch Befestigung zweier Seilführungseinrichtungen am hinteren Endbereich des Behälters wird der vertikale Abstand der an der Oberkante der Behälterseitenwand 11 verlaufenden Seilabschnitte verringert, so dass das Seil 16 außerhalb des Schwenkradius einer pendelnden oder klappenden Seitenwand 11 verläuft. Vorzugsweise gelingt dies dadurch, dass ein koaxial angeordnetes Umlenkrollenpaar 34 am hinteren Behälterende die zu einer darunter angeordneten Seilführungseinrichtung 33 führenden Seilabschnitte umlenkt. Außerdem betrifft die vorliegende Erfindung eine Verbesserung der Abstützmöglichkeiten einer zusammengefalteten Plane. Durch einen am vorderen Endbereich des Behälters befestigten Stützkörper 37 ist es möglich, die Plane mit den daran befestigten Querstreben 14, 18 und Gleitschuhen 15 im Vorderbereich des Behälters abzulegen, ohne dass die Zugänglichkeit des hinteren Ladebereichs durch den Stützkörper 37 beeinträchtigt wird.

## Beschreibung

Einseitig offene Behälter werden häufig mit einer Plane aus PVC oder einem ähnlichen Material abgedeckt. Ein mechanisches Planensystem erleichtert das Aufspannen und Zusammenfalten der Plane. Insbesondere sind derartige Planensysteme bei Containern auf der Ladefläche oder den Anhängern von Nutzfahrzeugen in Gebrauch.

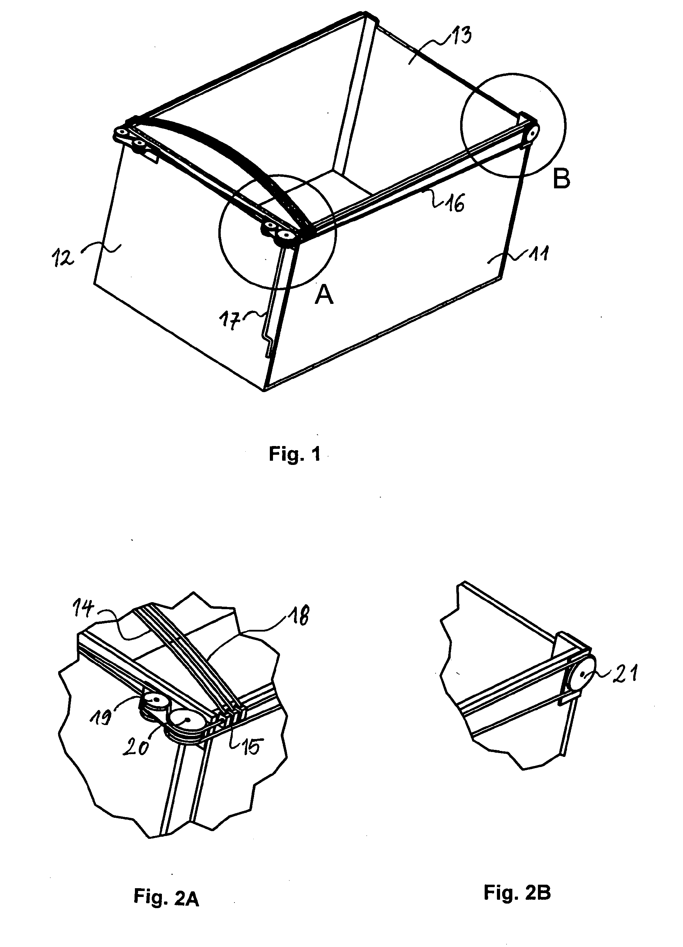

Die Figur 1 zeigt einen Fahrzeugcontainer mit einem herkömmlichen Planensystem. Vergrößerte Ausschnitte davon sind in den Figuren 2A und 2B zu sehen.

Auf dem Containerboden sind zwei Seitenwände **11,** eine vordere Stirnwand **12** und eine hintere Stirnwand **13** aufgesetzt. Das Planensystem umfasst eine Vielzahl konvex geformter Querstreben **14,** an deren Enden jeweils Gleitschuhe **15** befestigt sind. Durch die in der Regel meist direkt auf den Seitenwänden **11** abgestützten Gleitschuhe **15** wird ein Seil **16** geführt. Die Querstreben **14** stützen eine die Oberseite des Behälters abdeckende Plane (nicht gezeigt) von unten ab.

Zum Hin- und Herbewegen der Gleitschuhe **15** und der mit diesen fest verbundenen Querstreben **14** wird das Seil **16** über eine Kurbel **17** von Hand angetrieben. Durch das Auseinander- und Zusammenschieben der Querstreben **14** wird gleichzeitig die mit den Querstreben fest verbundene Plane aufgespannt bzw. ziehharmonikaartig zusammengefaltet. Indem die hinterste Querstrebe **18** kraftschlüssig mit dem Seil **16** verbunden wird, ist das Aufspannen und Zusammenfalten der Plane allein durch Bewegen des Seils möglich, ohne dass die Plane oder die Querstreben **14** direkt angepackt werden müssten.

In dem gezeigten Beispiel umläuft das Seil **16** den Behälter an den Oberkanten der Seitenwände **11** und der vorderen Stirnwand **12.** An der Oberkante der Stirnwand angebrachte Umlenkrollen **19, 20** lenken das Seil längs der Oberkante der Seitenwände **11** durch Bohrungen in den einzelnen Gleitschuhen **15** zu einer am hinteren Ende der Oberkante der Seitenwände **11** angebrachten Umlenkrolle **21.** Die Umlenkrolle **21** ändert die Bewegungsrichtung des Seils **16** um ca. 180°, so dass das Seil **16** etwas unterhalb der Gleitschuhe **15** zurück zu den Umlenkrollen **19, 20** läuft, wo es wiederum um ca. 90° um die vertikale Hinterkante des Behälters herum umgelenkt wird. Die Achsenausrichtung der Umlenkrolle **21** ist gegenüber der Achsenausrichtung der Umlenkrollen **19, 20** um 90° gedreht.

Das oben dargestellte Planensystem hat sich insofern als nachteilig erwiesen, als es für solche Container unpraktisch ist, bei denen mindestens eine der Seitenwände **11** schwenkbar ausgebildet ist. Insbesondere ist dies bei den sogenannten Kippern der Fall. Für Modelle mit pendelnder Seitenwand, d.h. solchen bei denen die Seitenwand um eine Achse längs ihrer Oberkante geschwenkt wird, ist die Pendelbewegung noch bis zu einem gewissen Schwenkradius möglich. Sollen die Seitenwände **11** zum seitlichen Be- und Entladen aber um eine Achse längs der Seitenwand-Unterkante geklappt werden, ist bei dem herkömmlichen Planensystem zumindest der weiter unten verlaufende Seilabschnitt an der Oberkante der Seitenwände **11** im Schwenkbereich der Seitenwände. Die Seitenwände **11** können also erst nach dem Lösen der Seilspannung und zumindest teilweiser Demontage des Planensystems aufgeklappt werden.

Beim seitlichen Be- und Entladen besonders großer Gegenstände, die die Höhe der Seitenwände **11** übersteigt, ist zum Be- und Entladen ferner häufig ein vollständiges Aushängen und Abnehmen der Seitenwände **11** erforderlich. Dies ist beim herkömmlichen Planensystem ebenfalls erst nach dessen Demontage möglich.

Um dieses Problem zu umgehen sind Planensysteme bekannt, bei denen die Umlenkrollen weiter oben angeordnet sind. Dies erfordert allerdings eine zusätzliche Rahmenstruktur (nicht gezeigt) als Unterbau längs der Oberkante der Seitenwand. Der Unterbau dient zum Abstützen der Gleitschuhe, so dass die Querstreben zum Klappen der Seitenwand nicht demontiert werden müssen, sondern durch die Rahmenstruktur abgestützt bleiben. Nachteilig an dieser Variante ist allerdings, dass die Rahmenstruktur eine obere Grenze für die Größe der Ladegüter darstellt, die ja seitlich darunter hindurch passen müssen. Sollen Güter beladen werden, die diese Höchstgrenze übersteigen, müsste nun nicht nur das Planensystem, sondern auch die gesamte Rahmenstruktur zuvor demontiert werden.

Aufgabe der vorliegenden Erfindung ist es, ein Planensystem zu schaffen, das die oben erwähnten Nachteile des Stands der Technik überwindet und insbesondere nicht demontiert werden muss, wenn eine der Seitenwände aufgeklappt werden soll.

Die Aufgabe wird durch die Merkmale des beigefügten Anspruchs 1 gelöst. Danach weist das Planensystem zwei Seilführungseinrichtungen zum Befestigen im hinteren Endbereich des Behälters auf. Die spezielle Anordnung der Seilführungseinrichtungen ermöglicht es, die beiden Seilabschnitte an der Oberkante der Seitenwand nahezu parallel und damit außerhalb des Schwenkbereichs der Seitenwand zu führen. Die Unteransprüche betreffen bevorzugte Ausführungsformen der Erfindung, bzw. einen Behälter mit dem erfindungsgemäßen Planensystem.

Vorzugsweise weist die zusätzliche Seilführungseinrichtung zwei Umlenkrollen auf, in denen jeweils der zu der unterhalb angeordneten ersten Seilführungseinrichtung hinführende Seilabschnitt, bzw. der von dieser wegführende Seilabschnitt umgelenkt werden. Gegenüber dem in Figur 1 dargestellten herkömmlichen Planensystem lässt sich dadurch der vertikale Abstand der längs der Seitenwand verlaufenden Seilabschnitte von der Größe des Durchmessers der Umlenkrolle der ersten Seilführungseinrichtung auf den Differenzbetrag der Radien der beiden Umlenkrollen der zweiten Seilführungseinrichtung verringern. Typischerweise beträgt der Durchmesser einer Umlenkrolle 10 cm und der Differenzbetrag der beiden Radien etwa 1 cm.

Das Planensystem gemäß der vorliegenden Erfindung enthält vorzugsweise ferner eine dritte Seilführungseinrichtung zur Befestigung am Vorderende des Behälters, beispielsweise an dessen Stirnwand. Diese dritte Seilführungseinrichtung weist zwei Umlenkrollenpaare auf, die die beiden Seilabschnitte um ca. 90° zu einer an der Stirnwand befestigbaren Seilantriebseinrichtung umlenken. Die Anordnung der Umlenkrollen ermöglicht dabei eine nahezu freie Positionierung der Antriebseinrichtung an der Stirnwand. Dies ist gerade bei der von Nutzfahrzeugen bekannten räumlichen Enge zwischen Fahrerkabine und Stirnwand des Ladebereichs von Vorteil. Die Seilantriebseinrichtung kann in einem manuell betätigbaren Kurbelmechanismus oder einem Elektromotor oder dergleichen bestehen.

Zum Planensystem gehören vorzugsweise weiterhin mehrere Querstreben, die sich in Querrichtung über die Oberseite des Behälters erstrecken und die Plane von unten abstützen. Die Querstreben sind konvex geformt, so dass Niederschlag in Querrichtung zu den Seitenwänden hin abfließt. An den Enden der Querstreben sind Verbindungselemente in Form von Gleitschuhen vorgesehen, die die Verbindung zwischen den Querstreben und dem Seil herstellen. Die Gleitschuhe weisen Bohrungen auf, in denen das Seil leicht verschiebbar ist. Die Aufhängung der Querstreben am Seil ist frei schwebend, d.h. die Querstreben liegen mit ihren Gleitschuhen nicht an der Seitenwand auf, sondern werden allein durch das Seil abgestützt. Somit lässt sich die Seitenwand unterhalb des Seilverlaufs frei pendelnd aufhängen und sogar aufklappen, ohne dass das Planensystem demontiert werden muss.

Vorzugsweise umfasst das Planensystem ferner einen an der vorderen Stirnwand befestigbaren Stützkörper, auf den die Querstreben abgelegt werden können, wenn das Seil gelockert oder ganz demontiert werden soll. Die Länge des Stützkörpers ist nur gerade so groß, dass die Querstreben im zusammengeschobenen Zustand darauf Platz finden. Damit ist es im oben beschriebenen Fall des Aushängens einer Seitenwand möglich, alle Elemente außer dem Seil auf dem Behälter zu belassen. Der Stützkörper besteht vorzugsweise in einem an der Innenseite der Stirnwand befestigten Metallwinkel. Das Seil ist vorzugsweise ein mehrdrahtiges Stahlseil.

Anschließend werden bevorzugte Ausführungsbeispiele der vorliegenden Erfindung unter Bezugnahme auf die Zeichnungen näher beschrieben. Darin zeigt:
Figur 1 eine Darstellung eines Nutzfahrzeug-Behälters mit einem Planensystem gemäß dem Stand der Technik;
Figur 2A eine vergrößerte Darstellung eines Ausschnittbereichs A des in Figur 1 gezeigten Nutzfahrzeug-Behälters;
Figur 2B eine vergrößerte Darstellung eines Ausschnittbereichs B des in Figur 1 gezeigten Nutzfahrzeug-Behälters;
Figur 3 einen Behälter mit einem Planensystem gemäß einem ersten Ausführungsbeispiel der vorliegenden Erfindung;
Figur 4A eine vergrößerte Darstellung eines Ausschnittbereichs A des in Figur 3 gezeigten Ausführungsbeispiels;
Figur 4B eine vergrößerte Darstellung eines Ausschnittbereichs B des in Figur 3 gezeigten Ausführungsbeispiels;
Figur 5A eine schematische Darstellung einer Draufsicht eines Behälters mit einem Planensystem gemäß einem zweiten Ausführungsbeispiel der vorliegenden Erfindung; und
Figur 5B eine Seitenansicht des Seilverlaufs gemäß dem in Figur 5A gezeigten Ausführungsbeispiel.

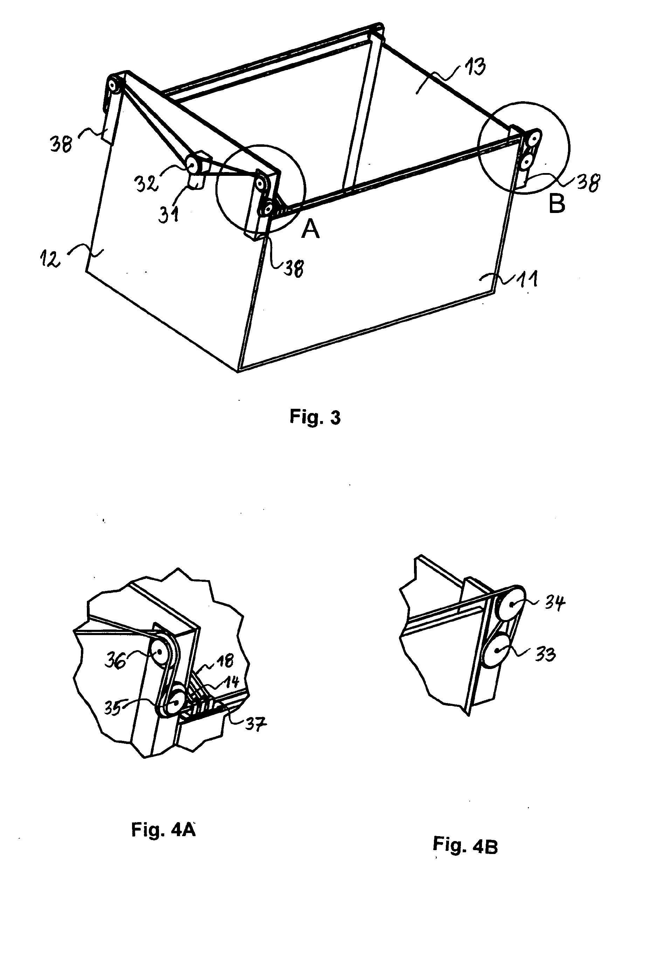

Die Elemente der Figuren 1 und 2 wurden weiter oben bereits in der Beschreibung des Stands der Technik erläutert. Funktionsmäßig übereinstimmende Elemente sind in den Figuren 3 und 4 mit den gleichen Bezugszeichen versehen.

Die Figur 3 zeigt schematisch einen Behälter mit Seitenwänden **11,** einer vorderen Stirnwand **12** und einer hinteren Stirnwand **13,** an dem das erfindungsgemäße Planensystem befestigt ist.

Die Darstellung des Planensystems in streng schematisch, um die wesentlichen Elemente der Erfindung, insbesondere den Seilverlauf, darzustellen. Die praktische Umsetzung des erfindungsgemäßen Prinzips erfordert handwerkliche Lösungen, wie z.B. das Befestigen der Umlenkrollen, das Spannen des Seils und dergleichen. Es wird davon ausgegangen, dass die praktische Umsetzung des erfindungsgemäßen Prinzips auch ohne die explizite Darstellung dieser Details für den Fachmann mühelos möglich ist.

Die Figur 3 zeigt einen in der Mitte der Stirnwand **12** befestigten Motor **31,** der über Andruckrollen **32** die Bewegung des Seils **16** ermöglicht. Ausgehend von dem Motor **31** umläuft das Seil **16** den Behälter längs der Oberkanten der Stirnwand **12** und der Seitenwand **11** auf beiden Seiten des Behälters bis zu einer an dessen Hinterende befestigten Umlenkrolle **33,** von wo es im wesentlichen den gleichen Seilverlauf nehmend wieder zurück zum Motor **31** geleitet wird.

Im Unterschied zum in Figur 1 dargestellten herkömmlichen Planensystem wird die Umlenkrolle **33** nun aber nicht wie die Umlenkrolle **21** in Figur 1 direkt am oberen Kantenbereich der Seitenwand angeordnet, sondern ein Stück darunter. Direkt darüber sind zwei weitere Umlenkrollen **34** befestigt, die die gleiche Achsenausrichtung wie die Umlenkrolle **33** haben. Von den zwei Umlenkrollen **34** führt eine das Seil **16** zu der Umlenkrolle **33** hin und die andere das Seil von dieser weg. Dadurch werden die Seilabschnitte nicht mehr vertikal übereinander, sondern nahezu horizontal nebeneinander längs der Oberkante der Seitenwand **11** geführt. Der vertikale Abstand der beiden Seilabschnitte verringert sich damit effektiv von der Größe des Durchmessers der Umlenkrolle **33** auf die Differenz der beiden Radien der Umlenkrollen **34.**

Am vorderen Stirnwandbereich sind zwei entsprechende Umlenkrollenpaare **35, 36** angeordnet. Das erste Umlenkrollenpaar **35** hat die gleiche Achsenausrichtung wie die hinteren Umlenkrollen **33, 34.** Das zweite Umlenkrollenpaar **36** weist hingegen eine dazu um 90° gedrehte Achsenausrichtung auf. Wie in der Figur gezeigt, lenken die zwei Umlenkrollenpaare **35, 36** das Seil **16** um die vertikale Hinterkante des Behälters herum zur Antriebseinrichtung **31.**

Zusätzlich weist das Planensystem gemäß dem in den Figuren 3 und 4 gezeigten Ausführungsbeispiel einen Stützkörper **37** auf, der vorzugsweise in Form eines Metallwinkels ausgebildet ist. Ein Schenkel des Metallwinkels ist am hinteren Eckbereich des Behälters angebracht, beispielsweise indem er, wie in der Figur gezeigt, innen an dessen vorderer Stirnwand **12** angeschraubt oder auf andere Weise befestigt ist. Der zweite Schenkel ragt horizontal nach hinten und ermöglicht das Ablegen der Gleitschuhe **15** mit den daran befestigten Querstreben oder Bügeln **14, 18.** Wird die Plane (nicht gezeigt) durch Zurückziehen des Seils **16** in ziehharmonikaartiger Weise zwischen den Querstreben **14, 18** zusammengefaltet und ans vordere Stirnende des Behälters geschoben, so findet sie einschließlich der daran befestigten Querstreben **14, 18** und Gleitschuhe **15** auf dem zweiten Schenkel der Stützvorrichtung **37** Platz. Jetzt lässt sich die Seilspannung auch bei abgenommenen Seitenwänden **11** lösen, ohne dass Plane und Querstreben **14, 18** herunterfallen. Somit kann das Seil **16** bequem abgenommen oder zumindest insoweit gelockert werden, dass besonders sperrige Güter, die die Seitenhöhe des Behälters übersteigen, seitlich ein- und ausgeladen werden können.

Im gezeigten Ausführungsbeispiel sind die Umlenkrollen **33** bis **36** an Stützpfeilern **38** befestigt, die an einer der Stirnwände oder dem Gehäuseboden befestigt sind. Je nach Art und Ausstattung des Behälters lassen sich die Umlenkrollen aber auch anders, beispielsweise direkt an den Stirnwänden befestigen.

Im gezeigten Ausführungsbeispiel wird ferner nur der obere, zur hinteren Umlenkrolle **33** hin führende Seilabschnitt in entsprechenden Bohrlöchern der Gleitschuhe **15** geführt. Der zurückführende Seilabschnitt verläuft etwas weiter unterhalb der Gleitschuhe **15** zurück zur Antriebseinrichtung **31.** Es ist aber auch möglich, den unteren Seilabschnitt anstatt oder zusätzlich zum oberen Seilabschnitt in entsprechenden Bohrlöchern der Gleitschuhe **15** zu führen. Außerdem sind in der schematischen Darstellung des Planensystems nur drei Querstreben gezeigt. Typischerweise sind aber je nach Länge des Behälters ca. zehn Querstreben vorgesehen.

Der vertikale Abstand der beiden Seilabschnitte entspricht im bevorzugten Ausführungsbeispiel gerade dem Unterschied der Radien der jeweiligen Umlenkrollenpaare **34, 35.** Alternativ ist es aber auch möglich, die Radien der beiden Umlenkrollenpaare **34** und **35** gleich groß zu wählen. Dann würden die beiden Seilabschnitte komplett parallel, d.h. ohne vertikalen Abstand geführt. Insbesondere in diesem Fall ist es vorteilhaft auch den von der Umlenkrolle **33** zur Antriebseinrichtung **31** zurück laufende Seilabschnitt in zusätzlichen zweiten Bohrlöchern der Gleitschuhe **15** zu führen.

Die oben beschriebene Darstellung des ersten Ausführungsbeispiels beschränkt sich auf die Erklärung des Seilverlaufs und des Stützkörpers **37** auf einer Seite des Behälters. Spiegelsymmetrisch dazu sind Seilverlauf und Stützkörper auf der anderen Seite sinngemäß zu ergänzen.

Die Anordnung der Umlenkrollen **33** bis **36** ist nicht auf das gezeigte Ausführungsbeispiel beschränkt. Für den Fachmann sind selbstverständlich alternative Ausführungsformen denkbar, die in den Schutzbereich der in den folgenden Ansprüchen definierten Erfindung fallen. So ist beispielsweise das Umlenkrollenpaar **36** auch unterhalb des Umlenkrollenpaars **35** befestigbar, was je nach gewünschter Positionierung der Antriebseinrichtung **31** einen günstigeren Seilverlauf ergeben kann.

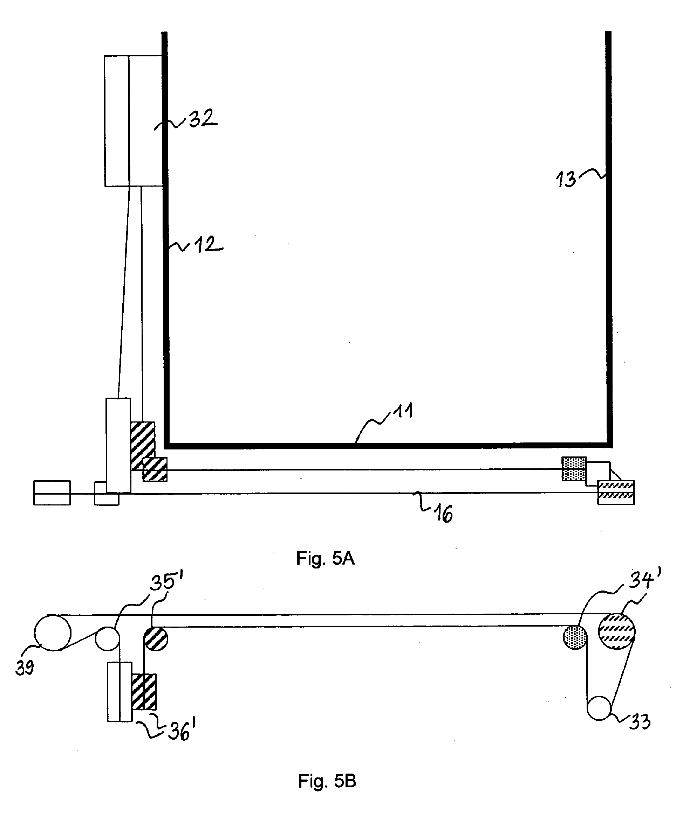

Eine derartige Alternative ist im zweiten Ausführungsbeispiel in den Figuren 5A und 5B gezeigt. Die Figuren beschränken sich auf eine schematisierte Darstellung des Seilverlaufs und geben nur das Seil **16,** die Stirnwände **12, 13,** die Seitenwand **11** und die Umlenkrollen wieder. Die übrigen Elemente des Planensystems sind gegenüber dem ersten Ausführungsbeispiel unverändert und werden der Einfachheit halber nicht in der Zeichnung dargestellt.

Auch im zweiten Ausführungsbeispiel sind die Umlenkrollen so angeordnet, dass die beiden Seilabschnitte an der Oberkante der Seitenwand **11** nahezu parallel, d.h. ohne vertikalen Abstand zueinander, verlaufen. Im Unterschied zum ersten Ausführungsbeispiel sind die Rollen des Umlenkrollenpaars **34'** aber nicht auf einer einzigen Achse, sondern seitlich versetzt am Hinterende des Behälters angeordnet. Mit dieser Variante lässt sich das Ziel einer frei schwenkbaren Seitenwand 11 ebensogut verwirklichen.

Auf ähnliche Weise lässt sich die Anordnung der Rollen am Vorderende des Behälters variieren. Im Unterschied zum ersten Ausführungsbeispiel ist das Umlenkrollenpaar **36'** nun vertikal unterhalb des Umlenkrollenpaars **35'** angeordnet. Außerdem ist das Umlenkrollenpaar **35'** nicht auf einer einzigen Achse befestigt, sondern die Rollen sind seitlich versetzt am Vorderende des Behälters angebracht. Auch hierdurch geht nichts vom gewünschten Effekt einer frei schwenkbaren Seitenwand 11 verloren.

Der von hinten kommende Seilabschnitt wird zunächst von einer zusätzlichen vorderen Umlenkrolle **39** um 180° umgelenkt. Durch die jeweils erste Rolle der Umlenkrollenpaaren **35'** und **36'** wird das Seil **16** anschlie-βend zweimal um ca. 90° umgelenkt und zu den Andruckrollen **32** geführt. Die zusätzliche **Umlenkrolle 39** weist dieselbe Achsenausrichtung wie das Umlenkrollenpaar **35'** auf. Der Abstand zwischen der Umlenkrolle **39** und dem Umlenkrollenpaar **35'** lässt sich beliebig variieren und damit an die gegebenen äußeren Rahmenbedingungen anpassen.

Durch die gezeigte Variante erhält man insgesamt mehr Rollenachsen und damit auch mehr benötigte Befestigungspunkte für die Rollen. Dafür hat man aber auch mehr Freiheitsgrade für die Anpassung des Planensystems an die konkreten äußeren Abmessungen des Behälters und die Platzverhältnisse zwischen Fahrerkabine und vorderer Stirnwand, von der die Positionierungsmöglichkeiten der Antriebseinrichtung **31** abhängen.

Die oben beschriebene Darstellung des zweiten Ausführungsbeispiels beschränkt sich wiederum auf die Erklärung des Seilverlaufs auf einer Seite des Behälters. Der Seilverlauf auf der anderen Seite ist sinngemäß spiegelsymmetrisch dazu zu ergänzen.

### Bezugszeichenliste

- 11: Seitenwand
- 12: vordere Stirnwand
- 13: hintere Stirnwand
- 14: Querstreben
- 15: Gleitschuhe
- 16: Seil
- 17: Kurbel
- 18: hinterste Querstrebe
- 19 bis 21: Umlenkrollen
- 31: Antriebseinrichtung
- 32: Andruckrollen
- 33, 39: Umlenkrollen
- 34 bis 36: Umlenkrollenpaare
- 34' bis 36': Umlenkrollenpaare
- 37: Stützkörper
- 38: Stützpfeiler

## Patentansprüche

1. Planensystem für einen Behälter, insbesondere für einen Container auf der Ladefläche oder einem Anhänger eines Nutzfahrzeugs, mit
einer Plane zum Abdecken der Oberseite des Behälters,
einem Seil **(16)** zum Aufspannen und Zusammenfalten der Plane,
einer im hinteren Endbereich des Behälters befestigbaren ersten Seilführungseinrichtung **(33)** zum Umlenken des Seils **(16),**
**gekennzeichnet durch** eine zweite, im hinteren Endbereich des Behälters befestigbare Seilführungseinrichtung **(34; 34').**

2. Planensystem nach Anspruch 1, wobei die zweite Seilführungseinrichtung **(34; 34')** zwei koaxial angeordnete Umlenkrollen aufweist, die jeweils den von der ersten Seilführungseinrichtung **(33)** weg und den zu dieser hin führenden Seilabschnitt umlenken.

3. Planensystem nach Anspruch 1 oder 2, wobei die zweite Seilführungseinrichtung **(34; 34')** oberhalb der ersten Seilführungseinrichtung **(33)** am Hinterende des Behälters anbringbar ist.

4. Planensystem nach einem der vorstehenden Ansprüche, ferner mit einer im vorderen Endbereich des Behälters befestigbaren dritten Seilführungseinrichtung **(35, 36; 35', 36'),** die vorzugsweise in zwei vertikal übereinander angeordneten Umlenkrollenpaaren besteht, die das Seil **(16)** zu einer Antriebseinrichtung **(31)** umlenken.

5. Planensystem nach Anspruch 4, wobei die Antriebseinrichtung **(31)** in einem Elektromotor mit Andruckrollen **(32)** zum Bewegen des Seils besteht.

6. Planensystem nach einem der vorstehenden Ansprüche, ferner mit mehreren Querstreben **(14, 18),** die dazu ausgelegt sind, die Oberseite des Behälters in Querrichtung zu überspannen, um die Plane von unten abzustützen, wobei die Querstreben über längs des Seils **(16)** verschiebbare Verbindungselemente **(15)** auf dem Seil ruhen.

7. Planensystem nach Anspruch 6, ferner mit einem im vorderen Endbereich des Behälters befestigbaren Stützkörper **(37),** auf dem die Querstreben **(14, 18)** ablegbar sind, wobei sich der Stützkörper vorzugsweise über weniger als ein Drittel der Länge des Behälters erstreckt.

8. Planensystem nach Anspruch 6 oder 7, wobei die Plane und die Querstreben **(14, 18)** fest miteinander verbindbar sind, und die hinterste Querstrebe **(18)** kraftschlüssig mit dem Seil **(16)** verbindbar ist, so daß sich die Plane durch Bewegen des Seils aufspannen und zusammenfalten läßt.

9. Behälter mit
einem Planensystem nach einem der vorstehenden Ansprüche,
zwei Stirnwänden **(12, 13)** und zwei Seitenwänden **(11),**
wobei wenigstens eine der Seitenwände **(11)** schwenkbar ist und das Seil (16) außerhalb ihres Schwenkbereichs angebracht ist.
